# EUROPEAN PATENT APPLICATION

(11) **EP 4 148 846 A1**
(43) Date of publication of application: **15.03.2023**
(21) Application number: 22186096.8
(22) Date of filing: 20.07.2022
(51) Int. Cl.: H01M 10/04, H01M 50/528, H01M 50/536, H01M 50/538, H01M 50/593

(54) **BATTERY CELL HAVING PROTECTIVE MEMBER**

(30) Priority: 14.09.2021 KR 20210122300
(71) Applicant: SK On Co., Ltd., Seoul 03161 (KR)
(72) Inventor: RHO, Mi So, 34124 Daejeon (KR)
(74) Representative: Stolmár & Partner Patentanwälte PartG mbB

(57) **Abstract**

A battery cell includes an electrode assembly including a plurality of electrode tabs, an electrode lead to which the plurality of electrode tabs are connected, a protective member accommodating a welded portion to which the plurality of electrode tabs and the electrode lead are welded therein, and a case accommodating the electrode assembly and the protective member therein, wherein the protective member includes a first cover disposed on one side of the welded portion and a second cover disposed on the other side of the welded portion and coupled to the first cover.

## Description

### CROSS-REFERENCE TO RELATED APPLICATION(S)

This application claims benefit of priority to Korean Patent Application No. 10-2021-0122300 filed on September 14, 2021 in the Korean Intellectual Property Office, the disclosure of which is incorporated herein by reference in its entirety.

### BACKGROUND

### 1. FIELD

The present disclosure relates to a battery cell having a protective member.

### 2. DESCRIPTION OF RELATED ART

A secondary battery such as a battery cell may be charged and discharged unlike a primary battery, and thus may be applied to various fields such as digital cameras, mobile phones, notebook computers, and hybrid vehicles. Examples of the secondary battery may include a nickel-cadmium battery, a nickel-metal hydride battery, a nickel-hydrogen battery, and a lithium secondary battery.

Such secondary batteries are generally formed by stacking a cathode, a separator, and an anode. Materials of these batteries are selected in consideration of battery life, charge/discharge capacity, temperature characteristics and stability.

The secondary battery is classified into a pouch type and a can type according to a material of a case accommodating an electrode assembly. In the pouch type, an electrode assembly is accommodated in a pouch formed of a soft polymer material having a non-uniform shape. In the can type, an electrode assembly is accommodated in a case formed of a material such as metal or plastic having a certain shape.

In the case of a related art pouch-type battery cell, an electrode lead is welded to an electrode tab of an electrode assembly and interconnected. However, when a welded portion repeatedly contacts the case, the case may be damaged and insulation between the welded portion and the case may be destroyed.

### SUMMARY

Exemplary embodiments provide a battery cell in which a welded portion of an electrode lead and an electrode tab are prevented from contacting a case.

According to an aspect of the present disclosure, a battery cell includes: an electrode assembly including a plurality of electrode tabs; an electrode lead to which the plurality of electrode tabs are connected; a protective member accommodating a welded portion to which the plurality of electrode tabs and the electrode lead are welded therein; and a case accommodating the electrode assembly and the protective member therein, wherein the protective member includes a first cover disposed on one side of the welded portion and a second cover disposed on the other side of the welded portion and coupled to the first cover.

The protective member may include an inner accommodating portion accommodating the plurality of electrode tabs disposed between the electrode assembly and the welded portion and an outer accommodating portion accommodating the welded portion.

The inner accommodating portion may have a cross-sectional area decreasing toward the outer accommodating portion.

The first cover may include a first outer cover forming the outer accommodating portion and an extension extending from the first outer cover toward the second cover, and the second cover may include a second outer cover forming the outer accommodating portion and a protrusion protruding from the second outer cover and coupled to the extension.

The extension may extend from both sides of the first outer cover, and each of the extensions may have a locking hole into which the protrusion is inserted.

The protrusion may protrude further in a direction away from the first cover.

When the first cover and the second cover are coupled, the extension may be elastically deformed while in contact with the protrusion and then be restored to an original state thereof when the protrusion is inserted into the locking hole.

The first cover and the second cover may be coupled to each other, while pressing the welded portion from both sides of the welded portion.

The first cover may include a first outer cover forming the outer accommodating portion and an extension extending from the first outer cover toward the second cover, the second cover may include a second outer cover forming the outer accommodating portion, and the extension may include a locking protrusion supporting the second outer cover, while coming into contact with a rear surface of the second outer cover, when the first cover is coupled to the second cover.

The first cover and the second cover may be coupled to each other in a sliding manner.

The first cover may include a first outer cover forming the outer accommodating portion and a rail protruding from an inner surface of the first outer cover, the second cover may include a second outer cover forming the outer accommodating portion and a rail groove formed on an outer surface of the second outer cover, and the first cover and the second cover may be slidably coupled to each other through the rail and the rail groove.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a battery cell according to an exemplary embodiment of the present disclosure;
FIG. 2 is an exploded perspective view of the battery cell illustrated in FIG. 1;
FIG. 3 is a partial cross-sectional view of the battery cell illustrated in FIG. 1;
FIG. 4 is an enlarged perspective view of a protective member illustrated in FIG. 2;
FIG. 5 is a cross-sectional view taken along line I-I' of FIG. 4;
FIG. 6 is an exploded perspective view of a protective member illustrated in FIG. 4;
FIG. 7 is a perspective view illustrating a protective member according to another exemplary embodiment of the present disclosure;
FIG. 8 is an exploded perspective view of a protective member illustrated in FIG. 7;
FIG. 9 is a perspective view illustrating a protective member according to another exemplary embodiment of the present disclosure; and
FIG. 10 is an exploded perspective view of a protective member illustrated in FIG. 9.

### DETAILED DESCRIPTION

Prior to the description of the present invention, terms and words used in the present specification and claims to be described below should not be construed as limited to ordinary or dictionary terms, and should be construed in accordance with the technical idea of the present invention based on the principle that the inventors may properly define their own inventions in terms of terms in order to best explain the invention. Therefore, the embodiments described in the present specification and the configurations illustrated in the drawings are merely the most preferred embodiments of the present invention and are not intended to represent all of the technical ideas of the present invention, and thus should be understood that various equivalents and modifications may be substituted at the time of the present application.

Hereinafter, preferred embodiments of the present invention will be described in detail with reference to the accompanying drawings. In this case, in the drawings, the same components are denoted by the same reference symbols as possible. Further, the detailed description of well-known functions and constructions which may obscure the gist of the present invention will be omitted. For the same reason, some of the elements in the accompanying drawings are exaggerated, omitted, or schematically illustrated, and the size of each element does not entirely reflect the actual size.

In addition, in the present specification, the expressions such as an upper side, a lower side, a side face, and the like, are described based on the drawings and may be expressed differently when the direction of the corresponding object is changed.

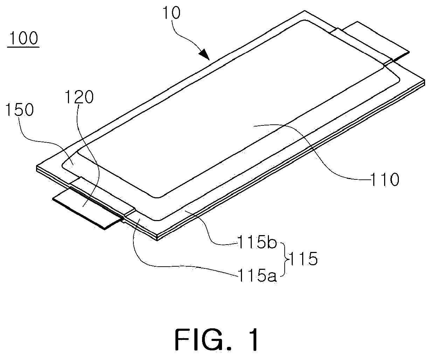

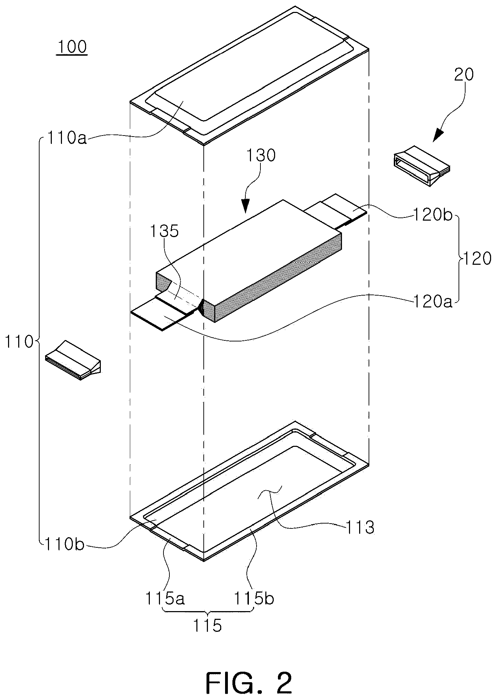

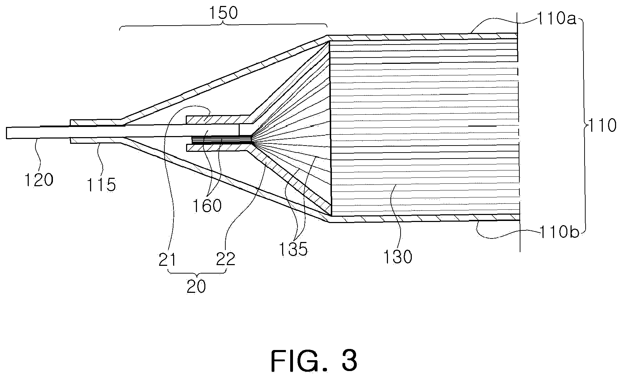

FIG. 1 is a perspective view schematically illustrating a battery cell according to an exemplary embodiment of the present disclosure, FIG. 2 is an exploded perspective view of the battery cell illustrated in FIG. 1, and FIG. 3 is a partial cross-sectional view of the battery cell illustrated in FIG. 1.

Referring to FIGS. 1 to 3, the battery cell 100 according to the present exemplary embodiment may include an electrode assembly 130, a case 110 accommodating the electrode assembly 130, and a protective member 20.

The battery cell 100 according to the present exemplary embodiment is a rechargeable secondary battery and may include a lithium ion (Li-ion) battery or a nickel metal hydride (Ni-MH) battery. A nickel metal hydride battery is a secondary battery using nickel in a cathode, a metal hydride in an anode, and an aqueous alkaline solution as an electrolyte, and since the nickel metal hydride battery has high capacity per unit volume, it may be used as an energy source for electric vehicles (EVs) and hybrid vehicles (HEVs) and may be used in various fields for energy storage.

The battery cell 100 may have a pouched type structure.

The case 110 may be used, for example, by insulating a surface of a metal layer formed of aluminum. For insulation treatment, modified polypropylene, which is a polymer resin, for example, casted polypropylene (CPP) is applied to form a heat-sealing layer, a resin material such as nylon or polyethylene terephthalate (PET) may be formed on an outer surface thereof.

The case 110 may have an accommodating space 113 in which the electrode assembly 130 is accommodated therein. In addition, electrode leads 120 may protrude to the outside of the case 110.

The electrode assembly 130 may be accommodated together with an electrolyte in the inner accommodating space 113 of the case 110. The case 110 may be completed by bonding a lower case 110b to an upper case 110a and then sealing the accommodating space 113 by bonding the edges in which the lower case 110b and the upper case 110a are in contact with each other. A thermal fusion method may be used as the bonding method of the edges, but is not limited thereto. Hereinafter, the bonded edge portion is referred to as a sealing portion 115.

The sealing portion 115 is formed as a flange extending externally from the accommodating space 113, and thus the sealing portion 115 may be disposed along the periphery of the accommodating space 113.

In the present exemplary embodiment, the sealing portion 115 may be divided into a first sealing portion 115a in which the electrode lead 120 is disposed and a second sealing portion 115b in which the electrode lead 120 is not disposed.

As illustrated in FIG. 3, an electrode tab 135 may be disposed between the electrode assembly 130 and the sealing portion 115. The electrode tabs 135 may electrically connect the electrode assembly 130 to the electrode lead 120, and a plurality of electrode tabs 135 may extend from the electrode assembly 130 to be bonded to at least one electrode lead 120.

The electrode tab 135 may be accommodated in a terrace (150 of FIG. 3). In the present exemplary embodiment, the terrace 150 may correspond to a periphery of a portion accommodating the electrode assembly 130 in the case 110. Also, the terrace 150 may be defined as a corresponding portion between the electrode assembly 130 and the sealing portion 115 in the case 110.

In the present exemplary embodiment, the electrode tab 135 is drawn out toward the first sealing portion 115a. Accordingly, the terrace 150 of the present exemplary embodiment may include a region between the electrode assembly 130 and the first sealing portion 115a.

However, even if the electrode tab 135 is not accommodated, an extra space formed between the electrode assembly 130 and the sealing portion 115 or a portion in which the battery cells 100 are not pressed (or contacted) therebetween when the battery cells 100 are laminated may be included in the terrace 150. For example, the terrace 150 may include a section in which a thickness of the battery cell 100 is gradually reduced toward the sealing portion 115.

Meanwhile, in the present exemplary embodiment, a case in which the sealing portion is disposed on four sides of the battery cell 100 is taken as an example, but it is also possible to configure the battery cell so that the sealing portion is disposed on only three sides by folding a casing forming the case.

The electrode lead 120 may include an anode lead 120a and a cathode lead 120b. The cathode lead 120a and the anode lead 120b may protrude from both sides of the case 110 and may each be connected to the electrode tab 135 of the electrode assembly 130.

The cathode lead 120a and the anode lead 120b may be formed of a thin plate-shaped metal. For example, the anode lead 120a may be formed of aluminum (Al), and the cathode lead 120b may be formed of copper (Cu). However, the present disclosure is not limited thereto.

In the present exemplary embodiment, the positive and anode leads 120a and 120b are disposed to face each other in opposite directions. However, the configuration of the present disclosure is not limited thereto, and various modifications are may be made as needed, such as disposing the cathode lead 120a and the anode lead 120b to face in the same direction.

In addition, the battery cell of the present exemplary embodiment may include at least one protective member 20.

The protective member 20 may be provided to prevent the electrode tab 135 of the battery cell 100 or a welded portion 160, which is a portion in which the electrode lead 120 and the electrode tab 135 are welded, from contacting the case 110.

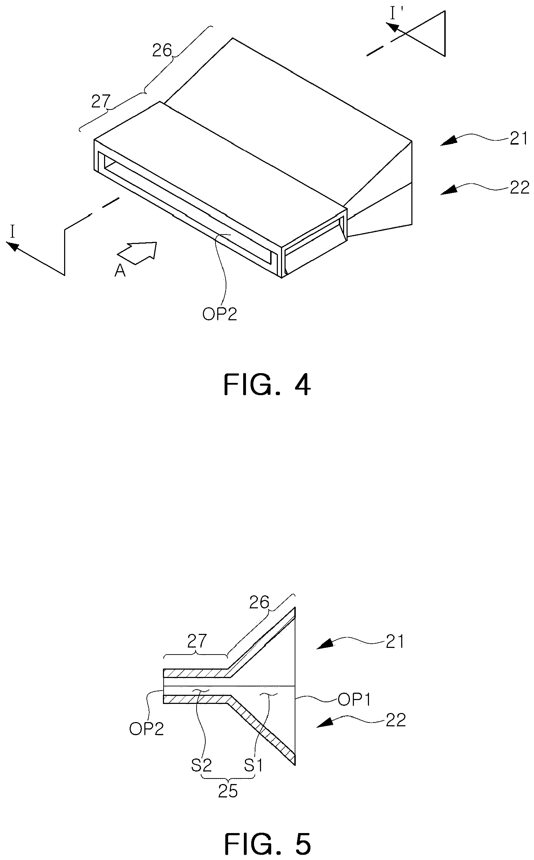

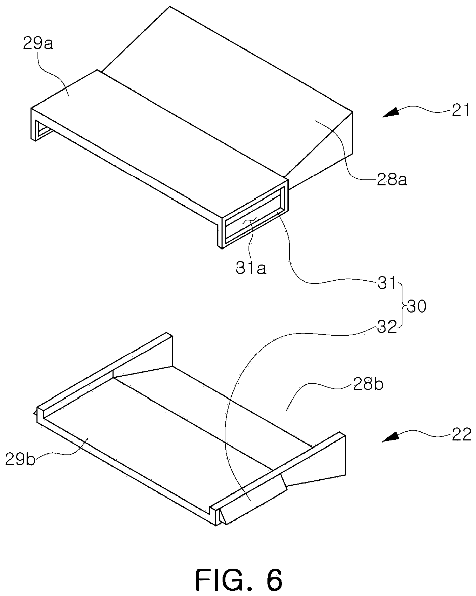

FIG. 4 is an enlarged perspective view of the protective member illustrated in FIG. 2, FIG. 5 is a cross-sectional view taken along line I-I' of FIG. 4, and FIG. 6 is an exploded perspective view of the protective member illustrated in FIG. 4.

Referring to FIGS. 4 to 6 together, the protective member 20 of the present exemplary embodiment may have an external shape in the form of a hollow pipe. For example, the protective member 20 may include an accommodating space 25 inside a body, and openings OP1 and OP2 through which the accommodating space 25 is connected to the outside may be formed at both sides of the body, respectively.

Since the protective member 20 should not be affected by the electrolyte of the battery cell 100 and should not be easily deformed by internal pressure of the battery cell 100, the protective member 20 may be formed of an insulating material having rigidity to withstand the internal pressure. For example, the protective member 20 may be formed of a resin material, but is not limited thereto.

A part or all of the electrode tabs 135 may be accommodated in the accommodating space 25 of the protective member 20. Accordingly, the protective member 20 may be disposed between the electrode tab 135 and the case 110 to prevent the electrode tab 135 from contacting the case 110.

Specifically, the accommodating space 25 of the protective member 20 may include an inner accommodating portion 26 in which a portion of the electrode tab 135 connecting the electrode assembly 130 and the welded portion 160 is accommodated and an outer accommodating portion 27 in which the welded portion is accommodated.

The inner accommodating portion 26 may be a portion disposed adjacently to the electrode assembly 130 when coupled to the electrode assembly 130, and may accommodate the electrode tab 135 disposed between the electrode assembly 130 and the welded portion 160. Accordingly, an internal space of the inner accommodating portion 26 may be formed to correspond to an overall shape of the electrode tabs 135 disposed between the electrode assembly 130 and the welded portion 160. For example, the inner accommodating portion 26 may include a first accommodating space S1 having a cross-sectional area decreasing toward the outer accommodating portion 27.

The outer accommodating portion 27 may extend from the inner accommodating portion 26 and may include a second accommodating space S2 for accommodating the welded portion 160 of the electrode tab 135 and the electrode lead 120. Therefore, the outer accommodating portion 27 may be formed in various types of spaces as long as it may accommodate the welded portion 160 described above.

As the welded portion 160 is disposed in the second accommodating space S2, even if a burr is formed in the welded portion 160, the burr may be prevented from coming into contact with the case 110.

Since the protective member 20 is disposed in the terrace 150, the protective member 20 may be formed to have a size acceptable to the space formed by the terrace 150. Also, since the electrode tab 135 is accommodated therein, an internal space may be formed to correspond to the shape of the electrode tab 135.

Also, the protective member 20 may include a first opening OP1 disposed to be adjacent to the electrode assembly 130 and a second opening OP2 disposed to face the electrode lead 120. The first opening OP1 and the second opening OP2 may be disposed to face in the opposite directions. Also, the accommodating space may be connected to the outside through the first and second openings OP1 and OP2.

The first opening OP1 may be formed in the inner accommodating portion 26 and may be disposed to face the electrode assembly 130. If necessary, the first opening OP1 may be disposed to contact the electrode assembly 130, but is not limited thereto.

The second opening OP2 may be formed in the outer accommodating portion 27, and the electrode lead 120 may extend to the outside of the protective member 20 through the second opening OP2. Accordingly, the second opening OP2 may be used as a path through which the electrode lead 120 is drawn out.

In addition, the protective member 20 of the present exemplary embodiment may include a first cover 21 and a second cover 22.

The first cover 21 may be disposed to be adjacent to one side of the welded portion 160, and the second cover 22 may be disposed to be adjacent to the other side of the welded portion 160 to be coupled to the first cover 21.

Accordingly, the first cover 21 and the second cover 22 may be disposed to face each other with the electrode tab 135 and the welded portion 160 interposed therebetween to be coupled to each other.

Referring to FIGS. 5 and 6, the first cover 21 and the second cover 22 may include inner covers 28a and 28b disposed to face the electrode tab 135 to form the inner accommodating portion 26 and outer covers 29a and 29b disposed to face the welded portion 160 to form the outer accommodating portion 27, respectively. In addition, the first cover 21 and the second cover 22 may include a coupling portion 30 coupling the first cover 21 and the second cover 22 to each other.

The inner covers 28a and 28b may include a first inner cover 28a provided in the first cover 21 and a second inner cover 28b provided in the second cover 22. In addition, the outer covers 28a and 28b may include a first outer cover 29a provided in the first cover 21 and a second outer cover 29b provided in the second cover 22.

The first cover 21 and the second cover 22 may equally or similarly bisect the first accommodating space S1 and the second accommodating space S2. In this case, the first inner cover 28a and the second inner cover 28b may have a same shape. However, the present disclosure is not limited thereto.

In addition, a coupling portion 30 may be provided in the first cover 21 and the second cover 22.

The coupling portion 30 may be provided to couple the first cover 21 and the second cover 22 to each other, and to this end, the coupling portion 30 may include an extension 31 provided in the first cover 21 and a protrusion 32 provided in the second cover 22.

Two extensions 31 may be formed to protrude from both sides of the first outer cover 29a. When the first cover 21 is coupled to the welded portion 160, the welded portion 160 may be positioned between the two extensions 31.

The extension 31 may extend toward the second cover 22 to be coupled to the protrusion 32 of the second cover 22. To this end, the extension 31 may have a locking hole 31a into which the protrusion 32 is inserted.

Two protrusions 32 may be formed to protrude from both sides of the second outer cover 29b. Also, when the second cover 22 is coupled to the welded portion 160, the welded portion 160 may be positioned between the two protrusions 32.

In the present exemplary embodiment, the protrusion 32 may protrude further in a direction away from the first cover 21. For example, the protrusion 32 may be formed as a protrusion having a triangular shape having a thickness increasing away from the first cover 21.

When the second cover 22 is coupled to the first cover 21, the second outer cover 29b may be positioned between the two extensions 31, and the protrusion 32 may be inserted into the locking hole 31a. In this process, the extension 31 comes into contact with the protrusion 32 to be elastically deformed, and thereafter, when the protrusion 32 is inserted into the locking hole 31a, the extension 31 may be restored to an original state thereof.

When the protrusion 32 is inserted into the locking hole 31a, an end portion of the protrusion 32 may pass through the locking hole 31a to protrude to the outside of the extension 31.

Therefore, when the first cover 21 and the second cover 22 are coupled to each other, the first cover 21 and the second cover 22 are not easily separated by the coupling of the protrusion 32 and the extension 31.

As such, in the battery cell 100 of the present exemplary embodiment, since the first cover 21 and the second cover 22 are coupled to each other with the welded portion 160 interposed therebetween to form the single protective member 20, the welded portion 160 may be very easily coupled to the electrode tab 135. This will be described in more detail as follows.

When the protective member 20 is manufactured as a single member, in order to couple the protective member 20 to the electrode tab 135, the electrode lead 120 should pass through the inner space of the protective member 20 and should be exposed to the outside of the protective member 20.

In this process, the electrode lead 120 may not be easily inserted into the inner space of the protective member 20 or interference may occur between the electrode lead 120 or the electrode tab 135 and the protective member 20. Due to this, the electrode tab 135 or the welded portion 160 may be damaged.

Meanwhile, according to the present exemplary embodiment, the first cover 21 and the second cover 22 may be disposed on one surface and the other surface of the welded portion 160, that is, above and below the welded portion 160, respectively, and then coupled to each other, thereby coupling the protective member 20 to the electrode tab 135. Therefore, the problem as described above may be minimized.

Also, as an example, a thickness of the second accommodating space S2 may be formed to be slightly less than a thickness of the welded portion 160. In this case, the protective member 20 may be pressed by an external force to be coupled to the welded portion 160, and when the protective member 20 is coupled to the welded portion 160, the outer covers 29a and 29b of the protective member 20 may continuously press the welded portion 160 in a thickness direction. Accordingly, the protective member 20 may be more firmly coupled to the welded portion 160.

Meanwhile, the present disclosure is not limited to the exemplary embodiment described above and various modifications may be made.

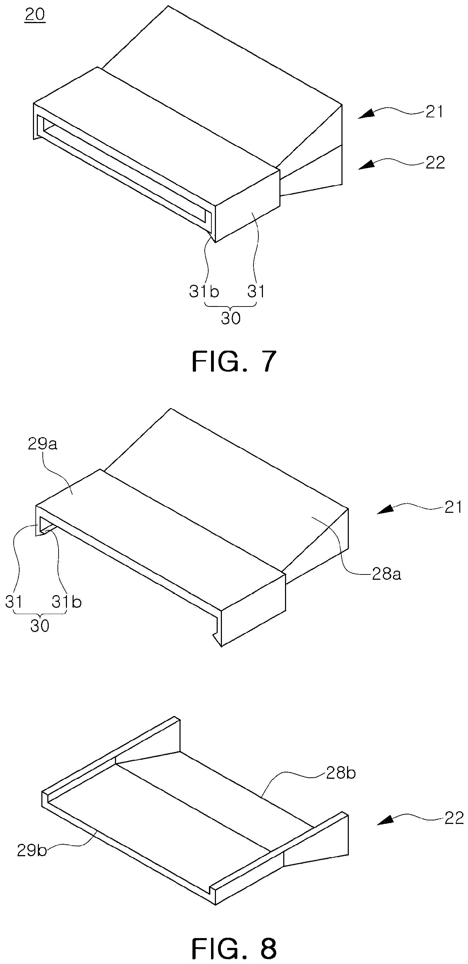

FIG. 7 is a perspective view illustrating a protective member according to another exemplary embodiment of the present disclosure, and FIG. 8 is an exploded perspective view of the protective member illustrated in FIG. 7.

Referring to FIGS. 7 and 8, the protective member 20 of the present exemplary embodiment may be formed to be similar to the protective member 20 of the exemplary embodiment described above, and may be different only in the configuration of the coupling portion 30.

The protective member 20 of the present exemplary embodiment may have a locking protrusion 31b in the extension 31 provided in the first cover 21.

The locking protrusion 31b may be formed to protrude from the inner surface of the extension 31, and when the first cover 21 and the second cover 22 are coupled to each other, at least a portion of the locking protrusion 31b may come into contact with a rear surface of the second cover 22 to support the rear surface of the second cover 22. At this time, a portion of the locking protrusion 31b in contact with the rear surface of the second cover 22 may be configured to be in surface contact with the rear surface of the second cover 22. Here, the rear surface of the second cover 22 refers to a surface opposite to the surface to which the second cover 22 is coupled.

When configuring the protective member 20 in this manner, the coupling portion 30 may be provided only in the first cover 21. However, the present disclosure is not limited thereto, and various modifications may be made, such as providing a structure that may be engaged with the locking protrusion 31b in the second cover 22.

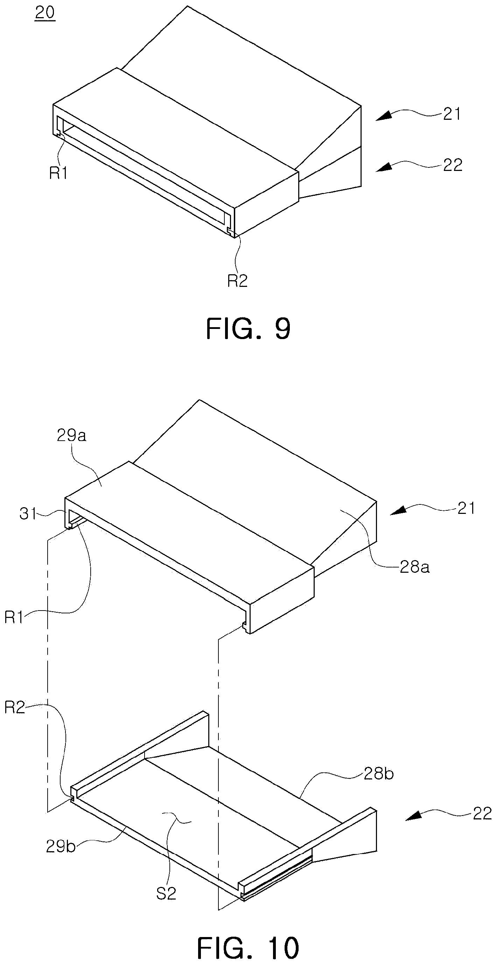

FIG. 9 is a perspective view illustrating a protective member according to another exemplary embodiment of the present disclosure, and FIG. 10 is an exploded perspective view of the protective member illustrated in FIG. 9.

Referring to FIGS. 9 and 10, in the protective member 20 of the present exemplary embodiment, the first cover 21 and the second cover 22 may be coupled to each other in a sliding coupling manner.

To this end, the first cover 21 may include a rail R1 and the second cover 22 may include a rail groove R2 into which the rail R1 is inserted.

The rail R1 of the first cover 21 may be disposed to protrude in a straight line form from the inner surface of the extension 31, and may be disposed parallel to a penetrating direction of the second accommodating space S2.

The rail groove R2 of the second cover 22 may be formed as a straight groove on an outer surface of the second outer cover 29b. The rail groove R2 of the second cover 22 may be formed as a groove corresponding to the shape of the rail R1 of the second cover 22. Therefore, in the protective member 20 of the present exemplary embodiment, the rail R1 of the first cover 21 may be slidably inserted into the rail groove R2 of the second cover 22 to be coupled to the second cover 22.

In the present exemplary embodiment, a case in which the rail R1 of the first cover 21 is formed to have a rectangular bar shape is taken as an example, but the configuration of the present disclosure is not limited thereto. For example, the rail R1 and the rail groove R2 may be modified to have various forms as long as the first cover 21 and the second cover 22 are coupled to each other in a sliding manner.

As set forth above, according to an exemplary embodiment of the present disclosure, since the welded portion is accommodated inside the protective member, contact between the welded portion and the case may be prevented. In addition, since the first cover and the second cover constituting the protective member are coupled to each other with the welded portion interposed therebetween, the protective member may be coupled to the welded portion very easily.

While example exemplary embodiments have been illustrated and described above, it will be apparent to those skilled in the art that modifications and variations could be made without departing from the scope of the present disclosure as defined by the appended claims.

## Claims

1. A battery cell comprising:
an electrode assembly including a plurality of electrode tabs;
an electrode lead to which the plurality of electrode tabs are connected;
a protective member accommodating a welded portion to which the plurality of electrode tabs and the electrode lead are welded therein; and
a case accommodating the electrode assembly and the protective member therein,
wherein the protective member includes a first cover disposed on one side of the welded portion and a second cover disposed on the other side of the welded portion and coupled to the first cover.

2. The battery cell of claim 1, wherein the protective member includes an inner accommodating portion accommodating the plurality of electrode tabs disposed between the electrode assembly and the welded portion and an outer accommodating portion accommodating the welded portion.

3. The battery cell of claim 2, wherein the inner accommodating portion has a cross-sectional area decreasing toward the outer accommodating portion.

4. The battery cell of claim 2, wherein
the first cover includes a first outer cover forming the outer accommodating portion and an extension extending from the first outer cover toward the second cover, and
the second cover includes a second outer cover forming the outer accommodating portion and a protrusion protruding from the second outer cover and coupled to the extension.

5. The battery cell of claim 4, wherein the extension extends from both sides of the first outer cover, and each of the extensions has a locking hole into which the protrusion is inserted.

6. The battery cell of claim 5, wherein the protrusion protrudes further in a direction away from the first cover.

7. The battery cell of claim 5, wherein, when the first cover and the second cover are coupled to each other, the extension is elastically deformed while in contact with the protrusion and then is restored to an original state thereof when the protrusion is inserted into the locking hole.

8. The battery cell of claim 1, wherein the first cover and the second cover are coupled to each other, while pressing the welded portion from both sides of the welded portion.

9. The battery cell of claim 2, wherein
the first cover includes a first outer cover forming the outer accommodating portion and an extension extending from the first outer cover toward the second cover,
the second cover includes a second outer cover forming the outer accommodating portion, and
the extension includes a locking protrusion supporting the second outer cover, while coming into contact with a rear surface of the second outer cover, when the first cover is coupled to the second cover.

10. The battery cell of claim 2, wherein the first cover and the second cover are coupled to each other in a sliding manner.

11. The battery cell of claim 10, wherein
the first cover includes a first outer cover forming the outer accommodating portion and a rail protruding from an inner surface of the first outer cover,
the second cover includes a second outer cover forming the outer accommodating portion and a rail groove formed on an outer surface of the second outer cover, and
the first cover and the second cover are slidably coupled to each other through the rail and the rail groove.
